# EUROPEAN PATENT APPLICATION

(11) **EP 2 840 019 A2**
(43) Date of publication of application: **25.02.2015**
(21) Application number: 13726584.9
(22) Date of filing: 08.02.2013
(51) Int. Cl.: B63H 9/06, B63H 9/10

(54) **IMPROVEMENTS TO SAIL FOR BOATS**

(30) Priority: 10.02.2012 ES 201230208
(71) Applicant: Cunto Lerín, José Javier, 50004 Zaragoza (ES)
(72) Inventor: Cunto Lerín, José Javier, 50004 Zaragoza (ES)
(74) Representative: Pons Ariño, Angel
(86) International application number: PCT/ES2013/070074
(87) International publication number: WO 2013/117794

(57) **Abstract**

The present invention relates to improvements to the subject matter of the main patent with application number P201031623 in respect of "sail for boats", wherein said improvements are based on the inclusion of a second section of fabric in the sail, which is narrower than the main section of fabric thereof, which continues to provide a sail with effective behaviour vis-à-vis the wind, when reefing, since the intrados and extrados thereof continue to be available during said operation, in addition to the inclusion of an orientable flap at the end opposite the mast of at least one of the sections of fabric of the sail.

## Description

### OBJECT OF THE INVENTION

The present invention relates to improvements made to the object of the principal patent with application number P201031623 for "sail for boats". Said improvements stem from the industrial application of the principal patent. The present improvements are based on the inclusion of a second sail cloth having a smaller width than the main sail cloth, which ensures effective sail reefing behaviour under certain wind conditions, as the intrados surface and extrados surface thereof remain intact during said operation.

Another of the improvements of the present invention relates to the constituent material of the sail cloth, graphene, which gives the sail resistance and elasticity, and can be composed of photovoltaic cells for leveraging solar energy and transforming it into electricity, making it possible to dispense with the electricity generators of the boat wherein the sail is disposed.

### BACKGROUND OF THE INVENTION

The principal patent having application number P201031623 discloses a sail for boats which is composed from a cloth that constitutes the sail, having folding/unfolding means, with the peculiarity that said sail is assisted by a structure conferring a wing shape thereto on unfolding and where two reels have been disposed on the mast for extending the cloth laterally. One reel contains the cloth while the other pulls on it by means of straps disposed on the cloth and fastened to the second reel, having envisaged the inclusion of guides disposed for the straps that transport the cloth and are fixed to the frame on the upper part inside the edge of the sail and on the lower part inside of what would be the boom.

However, the sail for boats of the principal patent is formed by a single body that requires reefing thereof under strong wind conditions, i.e. reduce part of the surface of the sail by folding it, whereby part of the qualities of the sail are lost.

The present improvements give rise to a sail that behaves effectively under certain wind conditions, as the intrados surface and extrados surface thereof remain intact, thereby solving the reefing problem.

Likewise, the improvements of the present invention increase the surface thereof, thereby obtaining a sail having greater stability and wind leveraging capacity and, consequently, greater speed.

Further, the sail associated with the improvements described below has high resistance and elasticity, and can be composed of photovoltaic cells for leveraging solar energy and transforming it into electricity.

### DESCRIPTION OF THE INVENTION

The improvements proposed by the invention solve the aforementioned problems in a fully satisfactory manner, in each of the aspects discussed, by combining the elements that form the sail object of the Spanish patent having application number P201031623 for "sail for boats" with at least a second cloth in the sail having a width smaller than the main cloth thereof, in such a manner as to provide a sail with effective wind behaviour on reefing, as the intrados surface and extrados surface thereof remain intact during said operation.

The sail also comprises a movable flap disposed on the end opposite the mast of at least one of the sail cloths that directs the wind, thereby avoiding air disturbances that could cause a slipstream effect. This improves performance considerably, as the wind does not cause disturbances on exiting and when the flap is oriented a cavity is opened in the leeward side of the sail that considerably increases the wind leverage capacity thereof.

Another improvement object of the present invention relates to the constituent material of the sail cloths, which are fully or partially made of graphene, giving rise to a highly resistant and elastic sail which can comprise a set of photovoltaic cells for leveraging solar energy and transforming it into electricity, making it possible to dispense with the electricity generators of the boat wherein the sail is disposed.

### DESCRIPTION OF THE DRAWINGS

In order to complement the description being and with the object of helping to better understand the characteristics of the invention, in accordance with a preferred embodiment thereof, said description is accompanied, as an integral part thereof, by a set of drawings where, in an illustrative and non-limiting manner, the following has been represented.

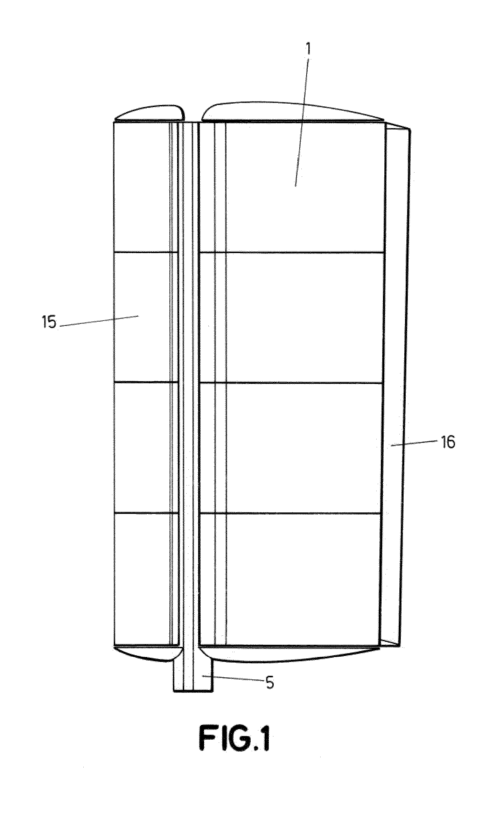

Figure 1. Shows an elevation view of the improvements made to the object of the principal patent having application number P201031623 for "sail for boats".

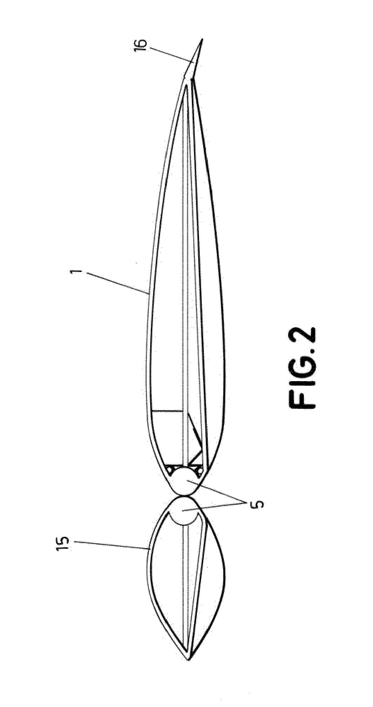

Figure 2. Shows a top plan view of the improvements introduced in the object of the principal patent having application number P201031623 for "sail for boats".

### PREFERRED EMBODIMENT OF THE INVENTION

Following is a description of a preferred embodiment of the invention, consisting of the improvements introduced in the object of the principal patent having application number P201031623 for "sail for boats".

These improvements are based on the fact that the sail comprises at least a second cloth (15) having a smaller width than the principal cloth (1) made of the same material and disposed parallel to the principal cloth (1) and on the opposite side of the mast (5), which in this preferred embodiment is a double mast (5), in such a manner that the principal cloth (1) is disposed as a front cloth of the sail and the second cloth (15) is disposed as a rear cloth.

Therefore, when reefing is required under strong wind conditions, the second cloth (15) is folded and the main cloth (1) does not lose its effectiveness under said wind conditions.

In other embodiments, the sail may have various masts (5) and/or various reels (13) for each of the cloths (1, 15) or a chain or zip system (not shown) disposed on the upper or lower part of the sail.

The sail also comprises a movable flap (16) disposed at the opposite end of the mast (5) of the main cloth (1) of the sail, for directing the wind, thereby avoiding air disturbances that could cause a slipstream effect.

Therefore, due to the improvements introduced, the sail for boats of the present invention may be used as a complement for oil tankers, freighters, ocean liners and other types of ships, achieving significant fuel savings, or for wind turbines as a substitute for traditional blades and for windsurfing boards, substituting the conventional sails.

## Claims

1. Sail for boats, the sail comprising:
- a mast (5);
- a fraim;
- a main cloth (1);
- folding/unfolding means, for folding/unfolding the main cloth (1);
- a structure for conferring a wing shape to the main cloth (1) on unfolding, the structure comprising:
- two reels located on the mast (5) for extending the main cloth (1) laterally, wherein a first reel contains the main cloth (1), while a second reel is configured so as to pull on the main cloth (1);
- straps located on the main cloth (1) and fastened to the second reel for allowing the second reel to pull on the main cloth (1); and
- guides fixed to the frame for guiding the straps;
**characterised in that** it additionally comprises at least a second cloth (15) having a smaller width than the main sail cloth (1).

2. Sail according to claim 1, **characterised in that** the second cloth (15) is disposed parallel and opposite to the mast (5) of the main cloth (1).

3. Sail according to any of the preceding claims, **characterised in that** it also comprises a movable flap (16) disposed at the end opposite the mast (5) of at least one of the sail cloths (1, 15).

4. Sail according to claim 3, **characterised in that** the movable flap (16) is disposed at the end opposite the mast (5) of the main sail cloth (1).

5. Sail according to any of the preceding claims, **characterised in that** the constituent material of at least one of the sail cloths (1, 15) is fully or partially made of graphene.

6. Sail according to claim 5, **characterised in that** the graphene cloth(s) comprise(s) a set of photovoltaic cells.
